(19) Europäisches Patentamt / European Patent Office / Office européen des brevets

(11) **EP 4 459 154 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(51) Internationale Patentklassifikation (IPC):
**F16H 1/32** *(2006.01)*

(52) Gemeinsame Patentklassifikation (CPC):
**F16H 1/321**

(21) Anmeldenummer: **24169613.7**

(22) Anmeldetag: **11.04.2024**

(54) **TAUMELGETRIEBE**

WOBBLE GEAR

ENGRENAGE À PLATEAU OSCILLANT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **20.04.2023   DE 202023102046 U**

(43) Veröffentlichungstag der Anmeldung:
**06.11.2024   Patentblatt 2024/45**

(73) Patentinhaber: **Laudenbach Holding GmbH 78559 Gosheim (DE)**

(72) Erfinder: **Laudenbach, Franz 78559 Gosheim (DE)**

(74) Vertreter: **Patentanwälte Ruff, Wilhelm, Beier, Dauster & Partner mbB Kronenstraße 30 70174 Stuttgart (DE)**

(56) Entgegenhaltungen:
DE-A1- 2 162 867    DE-A1- 2 619 838
FR-A1- 2 489 914

EP 4 459 154 B1

**Beschreibung**

Die Erfindung betrifft ein Taumelgetriebe mit den oberbegrifflichen Merkmalen des Anspruchs 1.

Aus der DE 26 19 838 A1 ist ein Taumelgetriebe mit den oberbegrifflichen Merkmalen des Anspruchs 1 bekannt.

Ein weiteres Taumelgetriebe ist aus der DE 297 07 039 U1 bekannt. Bei dem bekannten Taumelgetriebe weist der Taumelkörper an einer der Vorderseite gegenüberliegenden Rückseite einen weiteren Zahnkranz auf, der zum Zahneingriff mit dem Stützzahnkranz vorgesehen ist. Der Stützzahnkranz ist dementsprechend der Rückseite des Taumelkörpers zugewandt. Bei der Taumelbewegung des Taumelkörpers steht der Taumelzahnkranz im umlaufenden Wechsel über einen Teil seiner Umfangslänge in Zahneingriff mit dem Abtriebszahnkranz und der weitere Zahnkranz steht mit dem Stützzahnkranz im umlaufenden Wechsel in Zahneingriff. Es sind folglich vier Zahnkränze vorhanden, die paarweise miteinander in Zahneingriff stehen. Die Zahneingriffe sind in Umfangsrichtung des Taumelkörpers um 180° zueinander versetzt und finden daher an unterschiedlichen Teilen der Umfangslänge des Taumelkörpers statt.

Aufgabe der Erfindung ist es, ein Taumelgetriebe der eingangs genannten Art bereitzustellen, das einen vereinfachten Aufbau aufweist und eine unaufwändige und somit kostengünstige Herstellung in großen Stückzahlen erlaubt.

Diese Aufgabe wird durch das Bereitstellen eines Taumelgetriebes mit den Merkmalen des Anspruchs 1 gelöst. Bei der erfindungsgemäßen Lösung hat der Taumelzahnkranz folglich eine vorteilhafte Doppelfunktion, so dass auf einen weiteren Zahnkranz an der Rückseite des Taumelkörpers verzichtet werden kann. Das erfindungsgemäße Taumelgetriebe weist daher lediglich drei Zahnkränze auf. Hierdurch wird der Aufbau des Taumelgetriebes maßgeblich vereinfacht. Die Herstellung kann im Vergleich zu aus dem Stand der Technik bekannten Lösungen weniger aufwändig und kostengünstiger erfolgen. Zudem finden die beiden Zahneingriffe bei dem erfindungsgemäßen Taumelgetriebe an einem (gemeinsamen) Teil der Umfangslänge des Taumelkörpers statt. Dies im Unterschied zu der aus dem Stand der Technik bekannten Lösung, bei der bauartbedingt ein Versatz von 180° zwischen den vorder-und rückseitigen Zahneingriffen des Taumelkörpers vorliegt. Durch die erfindungsgemäße Lösung kann eine unvorteilhafte Belastung des Taumelkörpers vermieden werden. Das Taumelgetriebe sieht eine Übersetzung der Taumelbewegung des Taumelkörpers in eine langsamere Drehbewegung des Abtriebskörpers vor. Das Übersetzungsverhältnis ergibt sich auf eine dem Fachmann bekannte Weise durch das Zähnezahlverhältnis des Taumelzahnkranzes und des Abtriebszahnkranzes. Die Zähnezahlen des Taumelzahnkranzes und des Abtriebszahnkranzes sind um wenige, vorzugsweise ein, zwei oder drei, Zähne unterschiedlich. Der Stützzahnkranz und der Abtriebszahnkranz sind jeweils der Vorderseite des Taumelkörpers zugewandt und zueinander konzentrisch. Der Abtriebszahnkranz ist radial innen liegend und der Stützzahnkranz ist radial außen liegend angeordnet.

In Ausgestaltung der Erfindung entspricht eine Zähnezahl des Stützzahnkranzes der Zähnezahl des Taumelzahnkranzes. Infolge der identischen Zähnezahlen findet zwischen dem Taumelkörper und dem Stützkörper keine relative Rotation statt. Hierdurch können Verluste vermieden und ein besonders hoher Wirkungsgrad erreicht werden. Bei einer weiteren Ausgestaltung ist die Zähnezahl des Stützzahnkranzes um wenige Zähne, vorzugsweise ein, zwei oder drei, Zähne von der Zähnezahl des Taumelzahnkranzes unterschiedlich Gemäß der Erfindung weist der Abtriebszahnkranz einen kleineren Durchmesser auf als der Stützzahnkranz. Folglich ist der Abtriebszahnkranz konzentrisch radial innen liegend zu dem Stützzahnkranz. Diese Anordnung bietet konstruktive Vorteile.

Gemäß der Erfindung liegt eine radiale Außenmantelfläche des Abtriebszahnkranzes radial formschlüssig und in Umfangsrichtung gleitbeweglich an einer radialen Innenmantelfläche des Stützzahnkranzes an. Die Innenmantelfläche des Stützzahnkranzes fungiert folglich als Lagerfläche für den Abtriebszahnkranz, genauer: dessen Außenmantelfläche. Ein Normalenvektor der Außenmantelfläche weist in Bezug auf die Abtriebsachse radial nach außen. Die Orientierung der Innenmantelfläche ist hierzu entgegengesetzt. Diese Ausgestaltung erlaubt eine besonders kompakte Bauweise.

In weiterer Ausgestaltung der Erfindung weist der Stützzahnkranz einen der Vorderseite des Taumelkörpers zugewandten umlaufenden Abstandssteg auf, der bei der Taumelbewegung des Taumelkörpers einen komplementären Abstandssteg des Taumelzahnkranzes in einem umlaufenden Wechsel über einen Teil seiner Umfangslänge kontaktiert, wodurch ein Zusammendrücken der Zahneingriffe begrenzt ist. Der Abstandssteg des Stützzahnkranzes ist parallel zu der Abtriebsachse orientiert. Bei der Taumelbewegung des Taumelkörpers kontaktiert der komplementäre Abstandssteg den Abstandssteg im umlaufenden Wechsel an dem Teil der Umfangslänge des Taumelkörpers, der auch die beiden Zahneingriffe aufweist. Der Kontakt zwischen den beiden Abstandsstegen wirkt einem übermäßigen Zusammendrücken der Zahneingriffe entgegen. Hierdurch werden Reibungsverluste oder gar ein Verklemmen der Zahnkränze vermieden. Die Abstandsstege, genauer: deren Kontaktflächen, sind vorzugsweise radial nach außen abfallend geneigt. Die Neigung ist vorzugsweise so bemessen, dass sie durch einen Brennpunkt der Taumelbewegung des Taumelkörpers verläuft.

In weiterer Ausgestaltung der Erfindung sind die Abstandsstege in Bezug auf eine dem Taumelgetriebe zugrunde liegende Verzahnungsgeometrie derart dimensioniert, dass die Zahneingriffe jeweils auf einem definierten Wälzkreisdurchmesser erfolgen. Die Zahnkränze wälzen folglich gleitfrei aufeinander ab. Hierdurch werden Reibungsverluste minimiert.

In weiterer Ausgestaltung der Erfindung weist das Taumelgetriebe einen axialen Leitungsdurchlass auf, der entlang der Abtriebsachse zwischen einer Antriebsseite und einer Abtriebsseite des Taumelgetriebes durchgängig längserstreckt ist. Der durchgängig längserstreckte Leitungsdurchlass kann als Durchlass für elektrische oder sonstige Leitungen verwendet werden. Hierdurch ergibt sich eine besonders kompakte Gestaltung des Taumelgetriebes. Der axiale Leitungsdurchlass ist zwischen der Antriebsseite und der Abtriebsseite durch die unterschiedlichen Bauteile des Taumelgetriebes erstreckt, insbesondere durch den Abtriebskörper, den Stützkörper, den Taumelkörper und etwaige weitere Bauteile, wie beispielsweise einem Antriebskörper. Der Leitungsdurchlass ist koaxial zu der Abtriebsachse.

In weiterer Ausgestaltung der Erfindung ist der Taumelkörper mittels eines Kugelgelenklagers taumelnd gelagert, das einen an dem Abtriebskörper ausgebildeten Kugelgelenkkopf aufweist, der gelenkbeweglich in einer an dem Taumelkörper ausgebildete Kugelgelenkpfanne eingreift. Grundsätzlich sind unterschiedliche Lagerungskonzepte zur taumelnden Lagerung des Taumelkörpers denkbar, wie beispielsweise in der eingangs gewürdigten DE 297 07 039 U1 bereits gezeigt ist. Das Kugelgelenklager bietet jedoch besondere Vorteile, insbesondere da die Anzahl der erforderlichen Bauteile gering ist. Denn das Kugelgelenklager weist den Kugelgelenkkopf und die Kugelgelenkpfanne auf. Hierdurch werden die Fertigung und Montage vereinfacht. Der Kugelgelenkkopf ist an dem Abtriebskörper ausgebildet. Die Kugelgelenkpfanne ist komplementär zu dem Kugelgelenkkopf an dem Taumelkörper ausgebildet. Der Kugelgelenkkopf ist koaxial zu der Abtriebsachse. Das Zentrum des Kugelgelenkkopfs liegt im Brennpunkt der Taumelbewegung. Der Kugelgelenkkopf ist gemeinsam mit dem Abtriebskörper um die Abtriebsachse drehbar. Die Kugelgelenkpfanne taumelt gemeinsam mit dem Taumelkörper.

In weiterer Ausgestaltung der Erfindung übergreift die Kugelgelenkpfanne den Kugelgelenkkopf über dessen Äquator hinaus und damit axial formschlüssig. Durch den axialen Formschluss werden der Taumelkörper und der Abtriebskörper in Bezug auf die Abtriebsachse relativ zueinander axial festgelegt. Der Kugelgelenkkopf und die Kugelgelenkpfanne werden gleichsam miteinander verrastet oder verschnappt. Bei der Montage wird der Kugelgelenkkopf in die Kugelgelenkpfanne gedrückt und mit dieser verrastet/verschnappt. Dies setzt eine gewisse elastische Nachgiebigkeit der Kugelgelenkpfanne und/oder des Kugelgelenkkopfs voraus. Der Kugelgelenkkopf und die Kugelgelenkpfanne sind zu diesem Zweck vorzugsweise aus Kunststoff gefertigt.

In weiterer Ausgestaltung der Erfindung der Erfindung weist das Taumelgetriebe eine axiale Durchgangsbohrung auf, die entlang der Abtriebsachse durch den Kugelgelenkkopf und die Kugelgelenkpfanne längserstreckt ist. Sofern das Taumelgetriebe einen axialen Leitungsdurchlass aufweist, bildet die axiale Durchgangsbohrung des Kugelgelenklagers einen Abschnitt des axialen Leitungsdurchlasses. Die axiale Durchgangsbohrung ist sowohl durch den Kugelgelenkkopf als auch durch die Kugelgelenkpfanne längserstreckt.

In weiterer Ausgestaltung der Erfindung weist das Taumelgetriebe einen Lagerkörper auf, der drehfest und koaxial mit dem Abtriebskörper verbunden ist und einen Kopfabschnitt aufweist, der axial durch die Durchgangsbohrung ragt und kugelgelenkig mit einer dem Kugelgelenkkopf des Abtriebskörpers axial abgewandten Rückseite der Kugelgelenkpfanne zusammenwirkt. Durch den Lagerkörper kann eine nochmals verbesserte taumelnde Lagerung des Taumelkörpers erreicht werden. Zu diesem Zweck weist der mit dem Abtriebskörper verbundene Lagerkörper den erwähnten Kopfabschnitt auf. Dieser ragt durch die Durchgangsbohrung und wirkt kugelgelenkig mit der Rückseite der Kugelgelenkpfanne des Taumelkörpers zusammen. Bei dieser Ausgestaltung der Erfindung kann auch von einer "doppelten" Kugelgelenklagerung des Taumelkörpers gesprochen werden. Der Taumelkörper, genauer: dessen Kugelgelenkpfanne, ist zum einen kugelgelenkig an dem Kugelgelenkkopf des Abtriebskörpers gelagert und zum anderen kugelgelenkig an dem Kopfabschnitt des Lagerkörpers gelagert. Die Kugelgelenkpfanne des Taumelkörpers weist dabei eine konkave Innengelenkfläche auf, die mit dem Kugelgelenkkopf zusammenwirkt. Weiter weist die Kugelgelenkpfanne eine konvexe Außengelenkfläche auf, die mit einer komplementären Gelenkfläche des Kopfabschnitts des Lagerkörpers kugelgelenkig zusammenwirkt.

In weiterer Ausgestaltung der Erfindung ist ein Antriebskörper vorhanden und um eine Antriebsachse drehbar gelagert, wobei der Antriebskörper eine relativ zu der Antriebsachse schräg gestellte Stirnseite, die auch als Vorderseite bezeichnet werden kann, aufweist, an der wenigstens ein Abrollelement relativ zu dem Antriebskörper um eine Rollachse drehbeweglich gelagert ist, wobei das Abrollelement zum Antreiben der Taumelbewegung auf einer Rückseite des Taumelkörpers entlang einer zu dem Taumelzahnkranz konzentrischen Kreisbahn abrollt. Grundsätzlich sind unterschiedliche Antriebskonzepte zum Antreiben der Taumelbewegung denkbar, wie dies beispielsweise in der eingangs gewürdigten DE 297 07 039 U1 bereits gezeigt ist. Bei der aus dem Stand der Technik bekannten Lösung sind mehrere in Umfangsrichtung der Antriebsachse zueinander versetzt angeordnete walzenförmige Abrollelemente vorhanden, die radial in unmittelbarer Nähe der Antriebsachse auf der Rückseite des Taumelkörpers abrollen. Die Antriebsachse und die Abtriebsachse sind vorzugsweise koaxial. Die Stirnseite ist um einen Taumelwinkel des Taumelkörpers relativ zu der Antriebsachse schräg gestellt. Die Stirnseite ist der Rückseite des Taumelkörpers zugewandt. Das wenigstens eine Abrollelement ist an der Stirnseite angeordnet und wirkt unmittelbar auf die Rückseite des Taumelkörpers.

In weiterer Ausgestaltung der Erfindung ist das Abrollelement eine Kugel und die Kreisbahn ist durch eine in die Rückseite des Taumelkörpers eingesenkte Rinne gebildet. Dabei ist vorzugsweise genau eine Kugel vorhanden. Die kugelförmige Gestaltung des Abrollelements erlaubt eine besonders kompakte Bauform. Zudem können Roll- und Gleitreibungsverluste zwischen dem Abrollelement und der Rückseite des Taumelkörpers minimiert werden. Die in die Rückseite des Taumelkörpers eingesenkte Rinne dient einer verbesserten Führung der Kugel. Die Rinne weist einen zu der Kugel komplementären und folglich kreisabschnittsförmigen Querschnitt auf.

In weiterer Ausgestaltung der Erfindung weist die Kreisbahn einen Durchmesser auf, der wenigstens so groß ist wie ein Durchmesser des Taumelzahnkranzes. Hierdurch ist gewährleistet, dass das Abrollelement in Bezug auf die Radialrichtung unmittelbar an oder weiter radial außerhalb der Zahneingriffe an dem Taumelkörper angreift. Dies ist vorteilhaft hinsichtlich der resultierenden Kräfte- und Hebelarmverhältnisse sowie der resultierenden mechanischen Beanspruchungen, insbesondere des Taumelkörpers.

In weiterer Ausgestaltung der Erfindung ist der Antriebskörper in Form einer Antriebsscheibe einstückig aus Kunststoff gefertigt. Dies erlaubt eine unaufwändige und kostengünstige Herstellung in großen Stückzahlen.

In weiterer Ausgestaltung der Erfindung weist die Antriebsscheibe einen Antriebswellenansatz auf. Der Antriebswellenansatz ist zur wenigstens mittelbaren Kopplung mit einem Antriebsmotor eingerichtet. Zu diesem Zweck kann der Antriebswellenansatz mit einem Antriebsritzel, einer Riemenscheibe, einer Zahnscheibe oder einem sonstigen geeigneten Antriebselement versehen sein. Durch die einstückige Fertigung von Antriebsscheibe und Antriebswellenansatz wird eine weitere Reduzierung der Bauteileanzahl erreicht.

In weiterer Ausgestaltung der Erfindung ist der Taumelkörper mitsamt des Taumelzahnkranzes in Form einer Taumelscheibe einstückig aus Kunststoff gefertigt. Dies erlaubt eine unaufwändige und kostengünstige Herstellung in großen Stückzahlen.

In weiterer Ausgestaltung der Erfindung ist der Abtriebskörper mitsamt des Abtriebszahnkranzes in Form einer Abtriebsscheibe einstückig aus Kunststoff gefertigt. Auch diese Ausgestaltung der Erfindung begünstigt eine unaufwändige und folglich ökonomische Herstellung in hohen Stückzahlen.

In weiterer Ausgestaltung der Erfindung weist die Abtriebsscheibe einen Abtriebswellenansatz auf. Der Abtriebswellenansatz ist zur wenigstens mittelbaren Kopplung mit einem Abtriebselement eingerichtet. Durch die einstückige Fertigung von Abtriebsscheibe und Abtriebswellenansatz wird eine weitere Reduzierung der Bauteileanzahl erreicht.

In weiterer Ausgestaltung der Erfindung ist der Stützkörper mitsamt des Stützzahnkranzes ein einstückig aus Kunststoff gefertigtes Gehäuseteil, an welchem der Abtriebskörper um die Abtriebsachse drehbar gelagert ist. Das Gehäuseteil ist nicht drehbar und dient insbesondere der Lagerung des Abtriebskörpers. Das Gehäuseteil ist vorzugsweise Bestandteil eines Gehäuses des Taumelgetriebes, wobei bevorzugt ein antriebsseitiges Gehäuseteil und ein abtriebsseitiges Gehäuseteil vorhanden sind. Letzteres bildet vorzugsweise den Stützkörper. Durch diese Ausgestaltung der Erfindung kann eine weitere Reduzierung der Bauteileanzahl erreicht werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Fig. 1 zeigt in perspektivischer Explosionsdarstellung eine Ausführungsform eines erfindungsgemäßen Taumelgetriebes,

Fig. 2 eine weitere um etwa 180° gedrehte perspektivische Explosionsansicht des Taumelgetriebes nach Fig. 1,

Fig. 3 das Taumelgetriebe nach den Fig. 1 und 2 in einer schematischen Seitenansicht

Fig. 4 das Taumelgetriebe nach den Fig. 1 bis 3 in einem schematischen Längsschnitt entlang einer Schnittlinie IV-IV nach Fig. 3, und

Fig. 5 das Taumelgetriebe nach den Fig. 1 bis 4 in einem weiteren schematischen Längsschnitt entlang einer Schnittlinie V-V nach Fig. 4,

Fig. 6 in perspektivischer Explosionsdarstellung eine weitere Ausführungsform eines erfindungsgemäßen Taumelgetriebes und

Fig. 7 das Taumelgetriebe nach Fig. 6 in einem der Fig. 5 entsprechenden Längsschnitt.

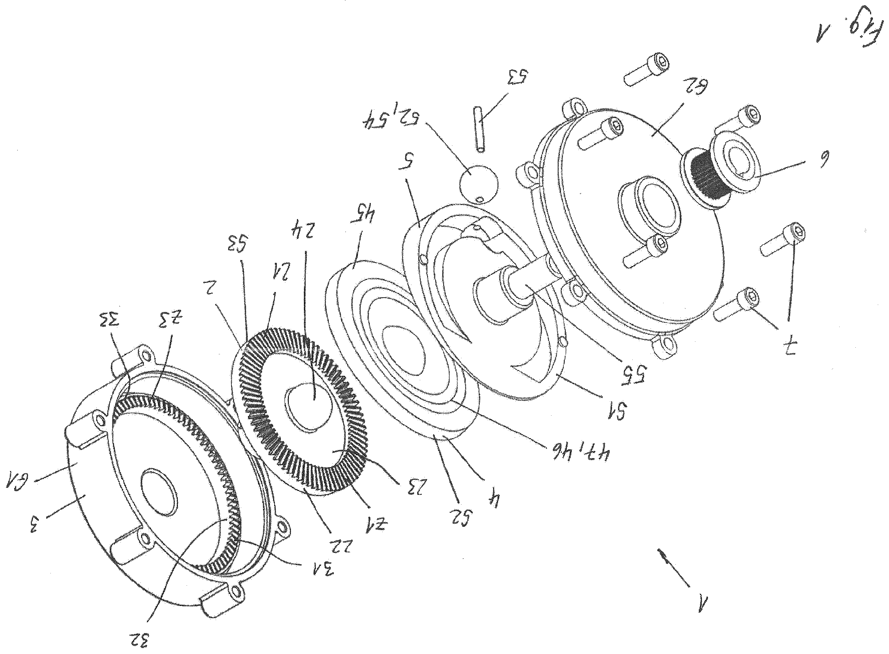

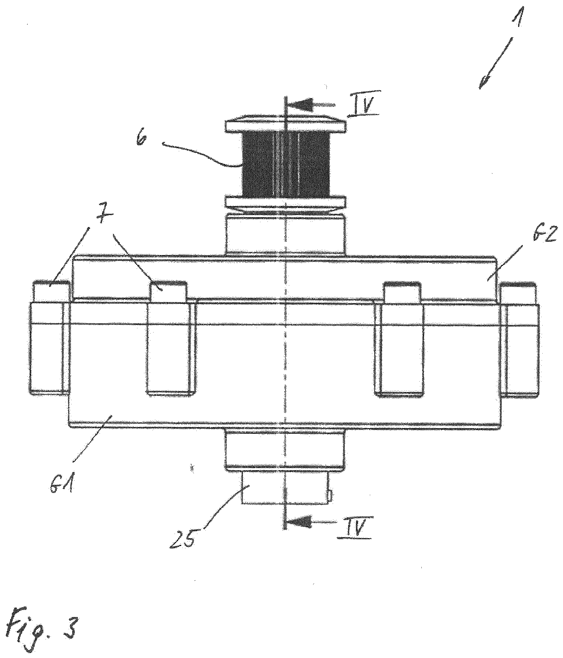

Gemäß den Fig. 1 bis 5 weist ein Taumelgetriebe 1 einen Abtriebskörper 2, einen Stützkörper 3 und einen Taumelkörper 4 auf.

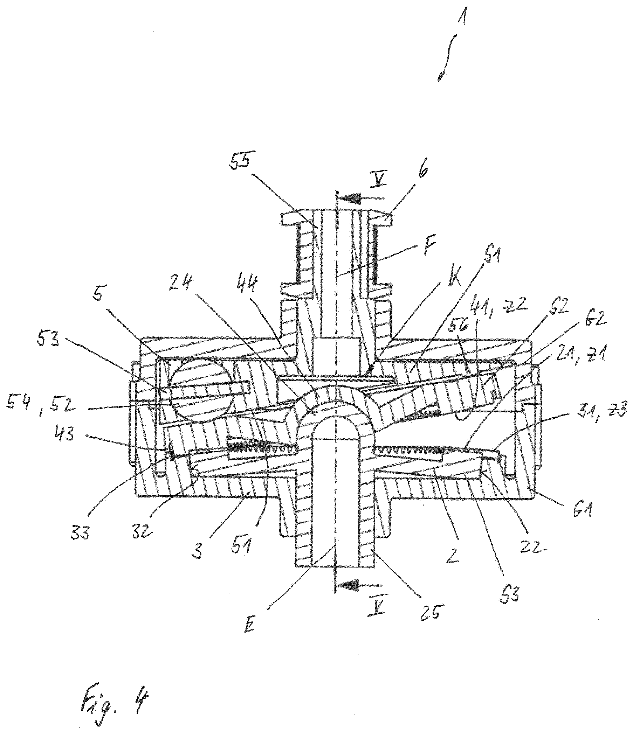

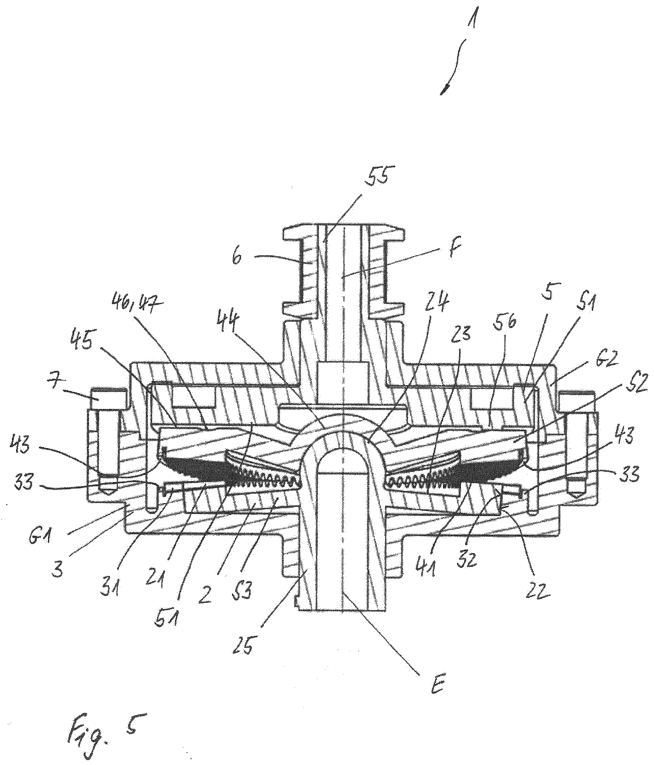

Der Abtriebskörper 2 ist um eine Abtriebsachse E (siehe Fig. 4, 5) auf noch näher beschriebene Weise drehbar gelagert und weist einen Abtriebszahnkranz 21 auf.

Der Stützkörper 3 ist im Unterschied zu dem Abtriebskörper 2 nicht drehbar und weist einen Stützzahnkranz 31 auf.

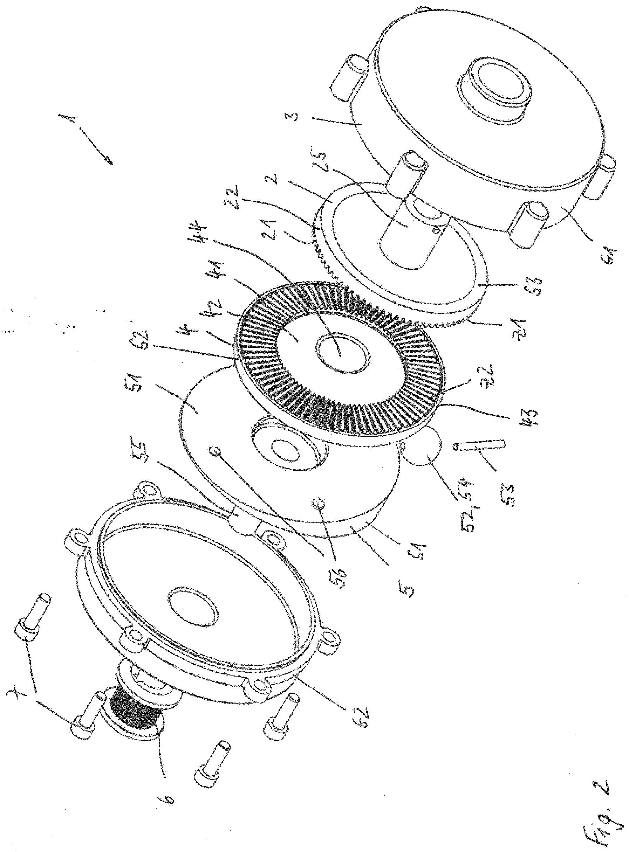

Der Taumelkörper 4 ist auf noch näher beschriebene Weise relativ zu der Abtriebsachse E taumelnd gelagert und weist einen Taumelzahnkranz 41 auf (siehe insbesondere Fig. 2). Der Taumelzahnkranz 41 ist auf einer Vorderseite 42 des Taumelkörpers 4 angeordnet.

Der Abtriebszahnkranz 21 und der Stützzahnkranz 31 sind jeweils der Vorderseite 42 des Taumelkörpers 4 und damit dem Taumelzahnkranz 41 zugewandt.

Bei einer Taumelbewegung des Taumelkörpers 4 ist der Taumelzahnkranz 41 in einem umlaufenden Wechsel über einen Teil seiner Umfangslänge in Zahneingriff mit dem Abtriebszahnkranz 21. Gleichzeitig ist der Taumelzahnkranz 41 in Zahneingriff mit dem Stützzahnkranz 31 (siehe insbesondere Fig. 4). Die beiden Zahneingriffe zwischen dem Taumelzahnkranz 41 und dem Abtriebszahnkranz 21 einerseits und andererseits zwischen dem Taumelzahnkranz 41 und dem Stützzahnkranz 31 laufen folglich um die Abtriebsachse E um. Der Taumelkörper 4 wird hierbei nicht etwa um die Abtriebsachse E rotiert, sondern lediglich taumelnd verlagert.

Maßgeblich für das resultierende Übersetzungsverhältnis zwischen der Taumelbewegung des Taumelkörpers 4 und der Drehbewegung des Abtriebskörpers 2 ist das Zähnezahlverhältnis der in Eingriff befindlichen Zahnkränze 41, 21, 31.

Dabei weist der Abtriebszahnkranz 21 eine erste Zähnezahl z1 auf. Der Taumelzahnkranz 41 weist eine zweite Zähnezahl z2 auf. Weiter weist der Stützzahnkranz 31 eine dritte Zähnezahl z3 auf.

Die erste Zähnezahl z1 und die zweite Zähnezahl z2 sind um wenige, vorzugsweise ein, zwei oder drei, Zähne voneinander unterschiedlich. Dementgegen sind die zweite Zähnezahl z2 und die dritte Zähnezahl z3 identisch.

Bei der gezeigten Ausführungsform weisen der Taumelzahnkranz 41 und der Stützzahnkranz 31 jeweils 80 Zähne auf, das heißt, die zweite Zähnezahl z2 und die dritte Zähnezahl z3 betragen jeweils 80. Der Abtriebszahnkranz 21 weist vorliegend 79 Zähne auf, so dass die erste Zähnezahl z1 79 beträgt.

Das resultierende Übersetzungsverhältnis zwischen der Taumelbewegung des Taumelkörpers 4 und der rotierenden Abtriebsbewegung des Abtriebskörpers 2 ergibt sich vorliegend als

$$i = z2/(z2-z1).$$

Wie insbesondere anhand der Fig. 4 und 5 gezeigt ist, sind der Abtriebszahnkranz 21 und der Stützzahnkranz 31 konzentrisch. Bei der gezeigten Ausführungsform ist der Abtriebszahnkranz 21 in Bezug auf die Abtriebsachse E radial innen liegend angeordnet, der Stützzahnkranz 31 ist radial außen liegend angeordnet. Folglich weist der Abtriebszahnkranz 21 einen kleineren Durchmesser auf als der Stützzahnkranz 31. Bei einer in den Figuren nicht gezeigten und nicht erfindungsgemäßen Ausführungsform sind stattdessen ein umgekehrtes Durchmesserverhältnis und damit einhergehend eine umgekehrte Anordnung vorgesehen, so dass der Stützzahnkranz 31 radial innen liegend und der Abtriebszahnkranz 21 radial außen liegend angeordnet ist.

Der Abtriebskörper 2 weist eine radial nach außen weisende Außenmantelfläche 22 auf. Der Stützzahnkranz 31 weist eine radial nach innen weisende Innenmantelfläche 32 auf. In montiertem Zustand ist der Abtriebskörper 2 über seine Außenmantelfläche 22 in Bezug auf die Abtriebsachse E radial formschlüssig und in Umfangsrichtung gleitbeweglich an der Innenmantelfläche 32 abgestützt. Die Innenmantelfläche 32 fungiert folglich als Lagerfläche für den Abtriebskörper 2.

Der Stützzahnkranz 31 weist einen Abstandssteg 33 auf. Der Abstandssteg 33 ist der Vorderseite 42 des Taumelkörpers 4 zugewandt. Der Taumelzahnkranz 41 weist einen komplementären Abstandssteg 43 auf, der dem Abstandssteg 33 des Stützkörpers 3 zugewandt ist. Bei der besagten Taumelbewegung liegen die beiden Abstandsstege 33, 43 im umlaufenden Wechsel über einen Teil ihrer Umfangslänge aneinander an. Hierdurch wird ein der Funktion des Taumelgetriebes abträgliches Zusammendrücken der Zahneingriffe zwischen dem Taumelzahnkranz 41 und dem Abtriebszahnkranz 21 sowie dem Stützzahnkranz 31 vermieden. Wie insbesondere anhand Fig. 4 gezeigt ist, liegen die beiden Abstandsstege 33, 43 im Bereich der umlaufenden Zahneingriffe aneinander an.

Vorliegend weisen die Zahnkränze 21, 31, 41 jeweils eine kegelige Geradverzahnung auf. Es sind aber auch hierzu alternative Kegelradverzahnungen möglich, beispielsweise eine Schräg-, eine Bogen- oder eine Hypoidverzahnung. Bei in den Figuren nicht gezeigten Ausführungsformen sind dementsprechend unterschiedliche Verzahnungsgeometrien und/oder -arten vorgesehen sein.

Vorliegend sind die beiden Abstandsstege 33, 43 in Bezug auf die dem Taumelgetriebe 1, genauer: den Zahnkränzen 21, 31, 41, zugrunde liegende Verzahnungsgeometrie derart dimensioniert, dass die Zahneingriffe jeweils auf einem definierten Wälzkreisdurchmesser erfolgen. Wie insbesondere in Fig. 4 ersichtlich ist, sind die Abstandsstege 33, 43 hierzu jeweils in Bezug auf die Antriebsachse E axial gegenüber den jeweiligen Kopfdurchmessern der Verzahnungen zurückgesetzt. Dieser axiale Versatz ist derart dimensioniert, dass der Taumelzahnkranz 41 und die beiden weiteren Zahnkränze 21, 41 jeweils auf dem Wälzkreisdurchmesser der Verzahnungsgeometrie in Eingriff gelangen.

Zur taumelnden Lagerung des Taumelkörpers 4 sind unterschiedliche Lagerungskonzepte denkbar und möglich. Bei der gezeigten Ausführungsform ist zu diesem Zweck ein Kugelgelenklager 24, 44 vorgesehen, das einen Kugelgelenkkopf 24 und eine Kugelgelenkpfanne 44 aufweist.

Vorliegend ist der Kugelgelenkkopf 24 an dem Abtriebskörper 2 angeordnet. Die Kugelgelenkpfanne 44 ist an dem Taumelkörper 4 angeordnet. Grundsätzlich ist auch eine hierzu umgekehrte Anordnung möglich.

Der Kugelgelenkkopf 24 und die Kugelgelenkpfanne 44 stehen miteinander gelenkbeweglich in Eingriff, ähnlich wie beispielsweise bei einem menschlichen Schultergelenk.

Das Zentrum (ohne Bezugszeichen) des Kugelgelenkkopfs 24 liegt im Brennpunkt der Taumelbewegung des Taumelkörpers 4 und damit auf der Abtriebsachse E. Die Kugelgelenkpfanne 44 ist in die Vorderseite 42 des Taumelkörpers 4 eingesenkt. Der Kugelgelenkkopf 24 ist der Vorderseite 42 des Taumelkörpers 4 zugewandt und dementsprechend an einer Rückseite 23 des Abtriebskörpers 21 angeordnet. Der Kugelgelenkkopf 24 ragt entlang der Antriebsachse E von der Rückseite 23 des Abtriebskörpers 2 auf. Dabei versteht sich, dass der Kugelgelenkkopf 24 koaxial zu dem Abtriebszahnkranz 21 und damit auch zu der Antriebsachse E ist. Der Kugelgelenkkopf ist folglich auch koaxial zu dem Stützzahnkranz 31.

Bei einer in den Figuren nicht gezeigten Ausführungsform übergreift die Kugelgelenkpfanne den Kugelgelenkkopf über dessen Äquator hinaus und damit axial formschlüssig. Zu diesem Zweck können der Kugelgelenkkopf und die Kugelgelenkpfanne miteinander verrastet und/oder verschnappt werden.

Zwecks Antriebs der Taumelbewegung des Taumelkörpers 4 sind unterschiedliche Antriebskonzepte denkbar und möglich. Vorliegend ist zu diesem Zweck ein Antriebskörper 5 vorhanden.

Der Antriebskörper 5 ist um eine Antriebsachse F (siehe Fig. 4, 5) auf noch näher beschriebene Weise drehbar gelagert und weist eine Stirnseite 51 auf, die relativ zu der Antriebsachse F schräg gestellt ist. Die schräg gestellte Stirnseite 51 ist einer Rückseite 45 des Taumelkörpers 4 zugewandt. Die Rückseite 45 des Taumelkörpers 4 liegt dessen Vorderseite 42 axial gegenüber. Die besagte Schrägstellung der Stirnseite 51 entspricht ihrem Betrag nach einem Winkel der Taumelbewegung des Taumelkörpers 4. Die Antriebsachse F ist vorliegend koaxial zu der Antriebsachse E.

An der schräg gestellten Stirnseite 51 ist ein Abrollelement 52 relativ zu dem Antriebskörper 5 um eine Rollachse 53 drehbeweglich gelagert. Das Abrollelement 52 rollt zum Antreiben der Taumelbewegung auf der Rückseite 45 des Taumelkörpers 5 ab. Genauer rollt das Abrollelement 52 entlang einer zu dem Taumelzahnkranz 41 konzentrischen Kreisbahn 46. Das Abrollelement 52 rotiert folglich gemeinsam mit dem Antriebskörper 5 um die Antriebsachse F und gleichzeitig relativ zu dem Antriebskörper 5 um die Rollachse 53. Die Rollachse 53 ist in etwa - aber nicht vollständig - orthogonal zu der Antriebsachse F. Vorliegend ist die Rollachse 53 entsprechend einem nicht näher bezeichneten Winkel relativ zu der Antriebsachse F derart schräg orientiert, dass sie durch den Brennpunkt der Taumelbewegung des Taumelkörpers 4 verläuft.

Bei der gezeigten Ausführungsform ist das Abrollelement 52 eine Kugel 54. Die Kreisbahn 46 ist durch eine in die Rückseite 45 des Taumelkörpers 4 eingesenkte Rinne 47 gebildet. Die Rinne 47 weist einen kreisabschnittsförmigen Querschnitt auf, der komplementär zu der Kugelform des Abrollelements 52 beziehungsweise der Kugel 54 ist. Die Rinne 47 dient einer verbesserten Führung der Kugel 54.

Die Kugel 54 ist in Bezug auf die Antriebsachse F radial (weitestmöglich) außen liegend an dem Antriebskörper 5 gelagert. Entsprechendes gilt sinngemäß für die Rinne 47 in Bezug auf den Taumelkörper 4. Die Rinne 47 und damit auch die Kugel 54 befinden sich radial in etwa auf einer Höhe mit den Zahneingriffen (siehe Fig. 4). Hierdurch wird eine vorteilhafte Kraftübertragung von dem Antriebskörper 5 auf den Taumelkörper 4 und damit auch auf den Abtriebskörper 2 gewährleistet. Der Durchmesser (ohne Bezugszeichen) der Rinne 47 entspricht vorliegend in etwa einem Durchmesser (ohne Bezugszeichen) des Taumelzahnkranzes 41.

Vorliegend weist der Antriebskörper 5 an seiner Stirnseite 51 zudem mehrere in Umfangsrichtung zueinander versetzt angeordnete Gleitabschnitte 56 auf. Die Gleitabschnitte 56 dienen einer gleitenden Abstützung an der Rückseite 45 des Taumelkörpers. Hierdurch wird vermieden, dass der Taumelkörper 4 relativ zu der Stirnseite 51 kippt.

Bei der gezeigten Ausführungsform ist der Antriebskörper 5 in Form einer Antriebsscheibe S1 einstückig aus Kunststoff gefertigt. Dabei weist die Antriebsscheibe S1 zudem einen Antriebswellenansatz 55 auf. Dieser ist der schräg gestellten Stirnseite 51 abgewandt und vorliegend zur Anbringung einer Riemenscheibe 6 eingerichtet. Die Riemenscheibe 6 ist über einen Antriebsriemen mit einem Antriebsmotor verbindbar. Anstelle der Riemenscheibe 6 kann aber auch ein Antriebsritzel oder sonstiges geeignetes Antriebselement vorgesehen sein.

Vorliegend ist zudem der Taumelkörper 4 in Form einer Taumelscheibe S2 einstückig aus Kunststoff gefertigt. Die einstückige Fertigung/Ausbildung umfasst auch den Taumelzahnkranz 41 und sämtliche weitere Abschnitte des Taumelkörpers 4, insbesondere die Kugelgelenkpfanne 44.

Weiter ist der Abtriebskörper 2 mitsamt des Abtriebszahnkranzes 21 in Form einer Abtriebsscheibe S3 einstückig aus Kunststoff gefertigt. Die einstückige Fertigung umfasst auch den Kugelgelenkkopf 24. Dabei weist die Abtriebsscheibe S3 einen Abtriebswellenansatz 25 auf. Dieser ist der Rückseite 23 und damit dem Kugelgelenkkopf 24 und dem Abtriebszahnkranz 21 axial abgewandt und dient einer Kopplung mit einem anzutreibenden Abtriebselement.

Bei der gezeigten Ausführungsform sind die Antriebsscheibe S1, die Taumelscheibe S2 und die Abtriebsscheibe S3 in einem Gehäuse G1, G2 aufgenommen und gelagert. Das Gehäuse G1, G2 weist ein erstes Gehäuseteil und ein zweites Gehäuseteil auf, die auch als Abtriebsgehäuse G1 und Antriebsgehäuse G2 bezeichnet werden können und mittels mehrerer Zylinderschrauben 7 miteinander verschraubt sind. Dabei dient das Antriebsgehäuse G2 in erster Linie der Lagerung der Antriebsscheibe S1. Das Abtriebsgehäuse G1 dient in erster Linie der Lagerung der Abtriebsscheibe S3.

Vorliegend bildet das Abtriebsgehäuse G1 den besagten Stützkörper 3. Der Stützkörper 3/das Abtriebsgehäuse G1 ist einstückig aus Kunststoff gefertigt. Diese einstückige Fertigung umfasst auch den Stützzahnkranz 31.

Die Fertigung aus Kunststoff erfolgt vorzugsweise jeweils mittels Spritzgießens. In diesem Zusammenhang hat sich die besagte Geradverzahnung der Zahnkränze 21, 31, 41 als besonders vorteilhaft erwiesen, da sie ohne besondere Vorkehrungen ausformbar ist.

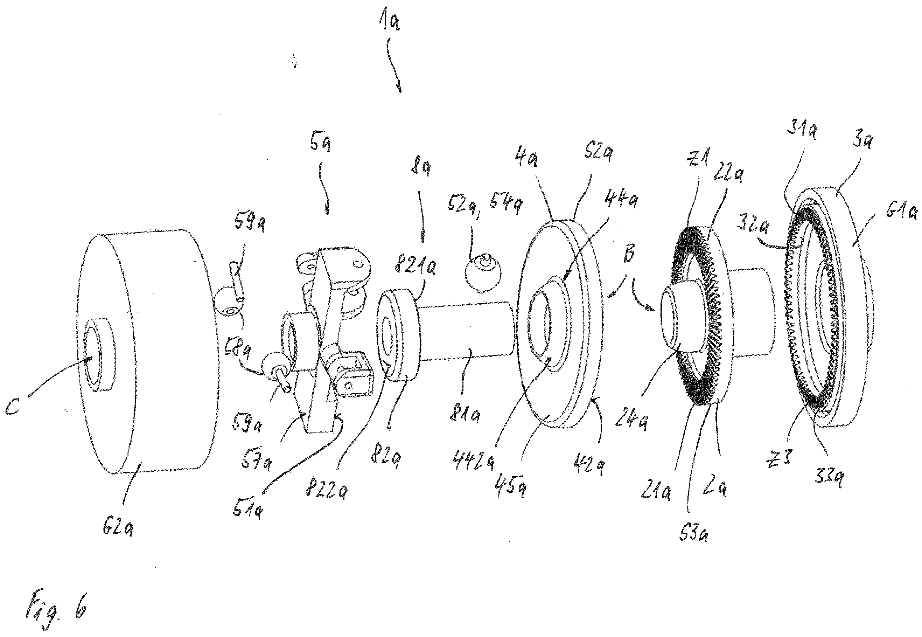

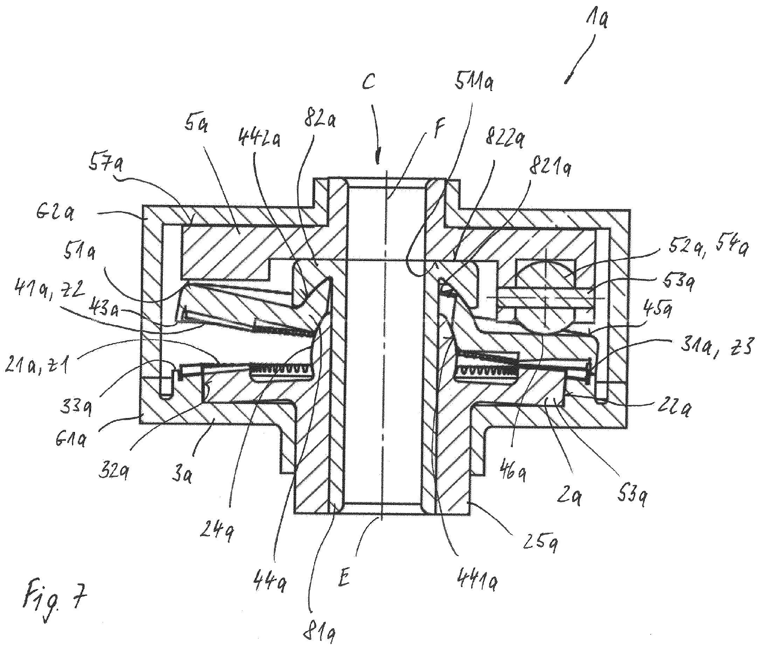

In den Fig. 6 und 7 ist eine weitere Ausführungsform eines erfindungsgemäßen Taumelgetriebes 1a gezeigt. Das Taumelgetriebe 1a nach den Fig. 6 und 7 ist hinsichtlich seiner Funktion und Gestaltung im Wesentlichen identisch zu dem Taumelgetriebe 1 nach den Fig. 1 bis 5. Das bereits zu dem Taumelgetriebe 1 nach den Fig. 1 bis 5 Offenbarte gilt, sofern nichts anderes beschrieben ist, in entsprechender Weise auch für das Taumelgetriebe 1a nach den Fig. 6 und 7. Dabei sind funktionsgleiche Bauteile und/oder Abschnitte mit identischer Bezugszeichenziffer unter Hinzufügung des Kleinbuchstabens a gekennzeichnet. Bereits unter Bezugnahme auf das Taumelgetriebe 1 nach den Fig. 1 bis 5 beschriebene Merkmale werden im Hinblick auf das Taumelgetriebe 1a nicht nochmals erläutert. Stattdessen wird auf die Offenbarung zu dem Taumelgetriebe 1 ausdrücklich Bezug genommen und verwiesen. Zur Vermeidung von Wiederholungen werden nachfolgend lediglich wesentliche Unterschiede des Taumelgetriebes 1a gegenüber dem Taumelgetriebe 1 erläutert.

Im Unterschied zu dem Taumelgetriebe 1 nach den Fig. 1 bis 5 weist das Taumelgetriebe 1a einen axialen Leitungsdurchlass C auf. Der axiale Leitungsdurchlass C ist entlang der Abtriebsachse E zwischen einer Antriebsseite und einer Abtriebsseite des Taumelgetriebes 1a durchgängig längserstreckt. Der axiale Leitungsdurchlass C erlaubt eine einfache und bauraumsparende Durchführung elektrischer Leitungen oder sonstiger Leitungen.

Der Leitungsdurchlass C ist koaxial zu der Abtriebsachse E und damit auch der Antriebsachse F. Vorliegend erstreckt sich der Leitungsdurchlass C durch den Abtriebskörper 2a, den Stützkörper 3a, den Taumelkörper 4a, den Antriebskörper 5a und durch das Gehäuse G1a, G2a.

Zur beweglichen Lagerung des Taumelkörpers 4a ist wiederum ein Kugelgelenklager 24a, 44a vorgesehen. Das Kugelgelenklager 24a, 44a weist einen Kugelgelenkkopf 24a und eine Kugelgelenkpfanne 44a auf. Wie bereits bei der vorhergehend erläuterten Ausführungsform ist der Kugelgelenkkopf 24a Bestandteil des Abtriebskörpers 2a. Die Kugelgelenkpfanne 44a ist Bestandteil des Taumelkörpers 4a.

Im Unterschied zu dem Kugelgelenklager 24, 44 des Taumelgetriebes 1 nach den Fig. 1 bis 5 weist das Kugelgelenklager 24a, 44a des Taumelgetriebes 1a eine axiale Durchgangsbohrung B auf (siehe insbesondere Fig. 6). Die axiale Durchgangsbohrung B bildet gleichsam einen Abschnitt des axialen Leitungsdurchlasses C. Die Durchgangsbohrung B ist sowohl durch den Kugelgelenkkopf 24a als auch durch die Kugelgelenkpfanne 44a hindurch erstreckt. Die Durchgangsbohrung B ist koaxial zu der Abtriebsachse E.

Um eine nochmals verbesserte bewegliche Lagerung des Taumelkörpers 4a zu ermöglichen, weist das Taumelgetriebe 1a einen Lagerkörper 8a auf.

Der Lagerkörper 8a ist koaxial zu dem Abtriebskörper 2a angeordnet und auf noch näher beschriebene Weise drehfest mit diesem verbunden. Der Lagerkörper 8a weist einen Kopfabschnitt 82a auf, der auf der Rückseite 45a des Taumelkörpers 4a angeordnet ist und kugelgelenkig mit der Kugelgelenkpfanne 44a zusammenwirkt. Im Speziellen weist der Kopfabschnitt 82a eine konkave Gelenkfläche 821a auf, die kugelgelenkig mit einer Rückseite 442a der Kugelgelenkpfanne 44a zusammenwirkt. Die Rückseite 442a kann auch als (konvexe) Außengelenkfläche der Kugelgelenkpfanne 44a bezeichnet werden. An ihrer Vorderseite 441a wirkt die Kugelgelenkpfanne 44a kugelgelenkbeweglich mit dem Kugelgelenkkopf 24a zusammen. Die Vorderseite 441a der Kugelgelenkpfanne 44a kann auch als (konkave) Innengelenkfläche bezeichnet werden.

Wie insbesondere in Fig. 7 gezeigt ist, ist der Taumelkörper 4a axial zwischen dem Abtriebskörper 2a, im Speziellen dessen Kugelgelenkkopf 24a, und dem Lagerkörper 8a, im Speziellen dessen Kopfabschnitt 82a, festgelegt.

Zur Verbindung mit dem Abtriebskörper 2a weist der Lagerkörper 8a einen Schaftabschnitt 81a auf. Der Schaftabschnitt 81a ist koaxial zu dem Antriebskörper 2a längserstreckt und durchgreift die Durchgangsbohrung B axial. Der Kopfabschnitt 82a ist einendes des Schaftabschnitts 81a angeordnet. Der Schaftabschnitt 81a ist in einen nicht näher bezeichneten Innenumfang des Abtriebskörpers 2a eingepasst und drehfest mit diesem verbunden. Zur Verbindung kann prinzipiell eine form-, kraft- und/oder stoffschlüssige Fügeverbindung zwischen dem Lagerkörper 8a und dem Abtriebskörper 2a vorgesehen sein.

Das Taumelgetriebe 1a unterscheidet sich zudem durch die Gestaltung des Antriebskörpers 5a von dem Taumelgetriebe 1 nach den Fig. 1 bis 5.

Der Antriebskörper 5a weist eine Vorderseite 51a auf, an der ein Abrollelement 52a relativ zu dem Antriebskörper 5a um eine Rollachse 53a drehbeweglich gelagert ist. Bei dem Abrollelement 52a handelt es sich wiederum um eine Kugel 54a. Zum Antreiben der Taumelbewegung des Taumelkörpers 4a rollt die Kugel 54a entlang einer Kreisbahn 46a auf der Rückseite 45a des Taumelkörpers 4a ab.

An seiner der Vorderseite 51a axial abgewandten Rückseite 57a weist der Antriebskörper 5a zwei Stützkugeln 58a auf (siehe Fig. 6), die jeweils um eine Rollachse 59a drehbeweglich an dem Antriebskörper 5a gelagert sind. Die Stützkugeln 58a rollen jeweils auf einer Innenseite des Antriebsgehäuses G2a ab.

An seiner Vorderseite 51a weist der Antriebskörper 5a zudem eine radial innen liegende Stützfläche 511a auf. Die radial innen liegende Stützfläche 511a grenzt unmittelbar an den zentralen Leitungsdurchlass C an und wirkt mit einer Stirnfläche 822a des Kopfabschnitts 82a des Lagerkörpers 8a zusammen. Die Stirnfläche 822a und die radial innen liegende Stützfläche 511a liegen axial formschlüssig und in Umfangsrichtung gleitbeweglich aneinander an.

**Patentansprüche**

1. Taumelgetriebe (1, 1a), aufweisend

   einen Abtriebskörper (2, 2a), der um eine Abtriebsachse (E) drehbar gelagert ist und einen Abtriebszahnkranz (21, 21a) aufweist,
   einen Stützkörper (3, 3a), der nicht drehbar ist und einen Stützzahnkranz (31, 31a) aufweist,
   einen Taumelkörper (4, 4a), der relativ zu der Abtriebsachse (E) taumelnd gelagert ist und einen Taumelzahnkranz (41, 41a) aufweist, der auf einer Vorderseite (42, 42a) des Taumelkörpers (4, 4a) angeordnet ist und dessen Zähnezahl (z2) um wenige, vorzugsweise ein, zwei oder drei, Zähne von einer Zähnezahl (z1) des Abtriebszahnkranzes (21, 21a) unterschiedlich ist,
   wobei der Taumelzahnkranz (41, 41a) bei einer Taumelbewegung des Taumelkörpers (4, 4a) in einem umlaufenden Wechsel über einen Teil seiner Umfangslänge in Zahneingriff mit dem Abtriebszahnkranz (21, 21a) steht,
   wobei der Stützzahnkranz (31, 31a) und der Abtriebszahnkranz (21, 21a) konzentrisch angeordnet und jeweils der Vorderseite (42, 42a) des Taumelkörpers (4, 4a) zugewandt sind,
   wobei der Taumelzahnkranz (41, 41a) bei der Taumelbewegung des Taumelkörpers in einem umlaufenden Wechsel über den besagten Teil seiner Umfangslänge zusätzlich in Zahneingriff mit dem Stützzahnkranz (31, 31a) steht,
   und wobei der Abtriebszahnkranz (21, 21a) einen kleineren Durchmesser als der Stützzahnkranz (31, 31a) aufweist,
   **dadurch gekennzeichnet, dass** eine radiale Außenmantelfläche (22, 22a) des Abtriebszahnkranzes (21, 21a) radial formschlüssig und in Umfangsrichtung gleitbeweglich an einer radialen Innenmantelfläche (32, 32a) des Stützzahnkranzes (31, 31a) anliegt.

2. Taumelgetriebe (1, 1a) nach Anspruch 1, **dadurch gekennzeichnet, dass** eine Zähnezahl (z3) des Stützzahnkranzes (31, 31a) der Zähnezahl (z2) des Taumelzahnkranzes (41, 41a) entspricht.

3. Taumelgetriebe (1, 1a) nach einem der vorhergehenden Ansprüche, **dadurch gekennzeichnet, dass** der Stützzahnkranz (31, 31a) einen der Vorderseite (42, 42a) des Taumelkörpers (4, 4a) zugewandten umlaufenden Abstandssteg (33, 33a) aufweist, der bei der Taumelbewegung des Taumelkörpers (4, 4a) einen komplementären Abstandssteg (43, 43a) des Taumelzahnkranzes (41, 41a) in einem umlaufenden Wechsel über einen Teil seiner Umfangslänge kontaktiert, wodurch ein Zusammendrücken der Zahneingriffe begrenzt ist.

4. Taumelgetriebe (1, 1a) nach Anspruch 3, **dadurch gekennzeichnet, dass** der Abstandssteg (33, 33a) und der komplementäre Abstandssteg (43, 43a) in Bezug auf eine dem Taumelgetriebe (1, 1a) zugrunde liegende Verzahnungsgeometrie derart dimensioniert sind, dass die Zahneingriffe jeweils auf einem definierten Wälzkreisdurchmesser erfolgen.

5. Taumelgetriebe (1a) nach einem der vorhergehenden Ansprüche, weiter aufweisend einen axialen Leitungsdurchlass (C), der entlang der Abtriebsachse (E) zwischen einer Antriebsseite und einer Abtriebsseite des Taumelgetriebes (1a) durchgängig längserstreckt ist.

6. Taumelgetriebe (1, 1a) nach einem der vorhergehenden Ansprüche, **dadurch gekennzeichnet, dass** der Taumelkörper (4, 4a) mittels eines Kugelgelenklagers (24, 24a; 44, 44a) taumelnd gelagert ist, das einen an dem Abtriebskörper (2, 2a) ausgebildeten Kugelgelenkkopf (24, 24a) aufweist, der gelenkbeweglich in eine an dem Taumelkörper (4, 4a) ausgebildete Kugelgelenkpfanne (44, 44a) eingreift, insbesondere wobei die Kugelgelenkpfanne (44, 44a) den Kugelgelenkkopf (24, 24a) über dessen Äquator hinaus und damit axial formschlüssig übergreift.

7. Taumelgetriebe (1a) nach Anspruch 6, **dadurch gekennzeichnet**, weiter aufweisend eine axiale Durchgangsbohrung (B), die entlang der Abtriebsachse (E) durch den Kugelgelenkkopf (24a) und die Kugelgelenkpfanne (44a) längserstreckt ist.

8. Taumelgetriebe (1a) nach Anspruch 7, weiter aufweisend einen Lagerkörper (8a), der drehfest und koaxial mit dem Abtriebskörper (2a) verbunden ist und einen Kopfabschnitt (81a) aufweist, der axial durch die Durchgangsbohrung (B) ragt und kugelgelenkig mit einer dem Kugelgelenkkopf (24a) des Abtriebskörpers (2a) axial abgewandten Rückseite der Kugelgelenkpfanne (44a) zusammenwirkt.

9. Taumelgetriebe (1, 1a) nach einem der vorhergehenden Ansprüche, **dadurch gekennzeichnet, dass** ein Antriebskörper (5, 5a) vorhanden und um eine Antriebsachse (F) drehbar gelagert ist.

**10.** Taumelgetriebe (1, 1a) nach Anspruch 9, **dadurch gekennzeichnet, dass** der Antriebskörper (5) eine, insbesondere relativ zu der Antriebsachse (F) schräg gestellte, Vorderseite (51, 51a) aufweist, an der wenigstens ein Abrollelement (52, 52a) relativ zu dem Antriebskörper (5, 5a) um eine Rollachse (53, 53a) drehbeweglich gelagert ist, wobei das Abrollelement (52, 52a) zum Antreiben der Taumelbewegung auf einer Rückseite (45, 45a) des Taumelkörpers (4, 4a) entlang einer zu dem Taumelzahnkranz (41, 41a) konzentrischen Kreisbahn (46, 46a) abrollt, insbesondere wobei das Abrollelement (52, 52a) eine Kugel (54, 54a) ist und/oder wobei die Kreisbahn (46) durch eine in die Rückseite (45, 45a) des Taumelkörpers (4, 4a) eingesenkte Rinne (47) gebildet ist und/oder wobei die Kreisbahn (46, 46a) einen Durchmesser aufweist, der wenigstens so groß ist wie ein Durchmesser des Taumelzahnkranzes (41, 41a).

**11.** Taumelgetriebe (1) nach Anspruch 9 oder 10, **dadurch gekennzeichnet, dass** der Antriebskörper (5) in Form einer Antriebsscheibe (S1) einstückig aus Kunststoff gefertigt ist, insbesondere wobei die Antriebsscheibe (S1) einen Antriebswellenansatz (55) aufweist.

**12.** Taumelgetriebe (1, 1a) nach einem der vorhergehenden Ansprüche, **dadurch gekennzeichnet, dass** der Taumelkörper (4, 4a) mitsamt des Taumelzahnkranzes (41, 41a) in Form einer Taumelscheibe (S2) einstückig aus Kunststoff gefertigt ist und/oder dass der Abtriebskörper (2, 2a) mitsamt des Abtriebszahnkranzes (21, 21a) in Form einer Abtriebsscheibe (S3) einstückig aus Kunststoff gefertigt ist, insbesondere wobei die Abtriebsscheibe (S3) einen Abtriebswellenansatz (25, 25a) aufweist.

**13.** Taumelgetriebe (1, 1a) nach einem der vorhergehenden Ansprüche, **dadurch gekennzeichnet, dass** der Stützkörper (3, 3a) mitsamt des Stützzahnkranzes (31, 31a) ein einstückig aus Kunststoff gefertigtes Gehäuseteil (G1) ist, an welchem der Abtriebskörper (2, 2a) um die Abtriebsachse (E) drehbar gelagert ist.

**Claims**

**1.** A wobble gear (1, 1a), having

an output body (2, 2a), which is mounted rotatably about an output axis (E) and has an output gear ring (21, 21a);
a supporting body (3, 3a), which is non-rotatable and has a supporting gear ring (31, 31a); and
a wobble body (4, 4a), which is mounted in a wobbling manner relative to the output axis (E) and which has a wobble gear ring (41, 41a) arranged on a front face (42, 42a) of the wobble body (4, 4a) and whose number of teeth (z2) differs by a few teeth, preferably by one, two or three teeth, from a number of teeth (z1) of the output gear ring (21, 21a),
wherein the wobble gear ring (41, 41a) meshes with the output gear ring (21, 21a) in a rotating alternation over part of its circumferential length during a wobble movement of the wobble body (4, 4a);
wherein the supporting gear ring (31, 31a) and the output gear ring (21, 21a) are arranged concentrically, each facing the front face (42, 42a) of the wobble body (4, 4a);
wherein the wobble gear ring (41, 41a) additionally meshes with the supporting gear ring (31, 31a) in a rotating alternation over the said part of its circumferential length during a wobble movement of the wobble body;
and wherein the output gear ring (21, 21a) has a smaller diameter than the supporting gear ring (31, 31a),
**characterized in that** a radial outer surface area (22, 22a) of the output gear ring (21, 21a) is in contact, radially in a positive manner and in the circumferential direction slidingly movable, with a radial inner surface area (32, 32a) of the supporting gear ring (31, 31a).

**2.** The wobble gear (1, 1a) according to claim 1, **characterized in that** a number of teeth (z3) of the supporting gear ring (31, 31a) corresponds to the number of teeth (z2) of the wobble gear ring (41, 41a).

**3.** The wobble gear (1, 1a) according to any of the preceding claims, **characterized in that** the supporting gear ring (31, 31a) has an all-round spacer rim (33, 33a) facing the front face (42, 42a) of the wobble body (4, 4a) which, during the wobble movement of the wobble body (4, 4a), contacts a complementary spacer rim (43, 43a) of the wobble gear ring (41, 41a) in a rotating alternation over part of its circumferential length, thereby limiting any forcing together of the meshings.

**4.** The wobble gear (1, 1a) according to claim 3, **characterized in that** the spacer rim (33, 33a) and the complementary spacer rim (43, 43a) are dimensioned, in respect of a gear geometry forming the basis of the wobble gear (1, 1a), such that the meshings are each effected on a defined pitch circle diameter.

**5.** The wobble gear (1a) according to any of the preceding claims, further having an axial cable passage (C), which extends longitudinally along the output axis (E) all the way between a drive side and an output side of the wobble gear (1a).

6. The wobble gear (1, 1a) according to any of the preceding claims, **characterized in that** the wobble body (4, 4a) is mounted in a wobbling manner by means of a ball joint bearing (24, 24a; 44, 44a), having a ball joint head (24, 24a) formed on the output body (2, 2a) which engages movably in the manner of a joint in a ball joint socket (44, 44a) formed on the wobble body (4, 4a), in particular wherein the ball joint socket (44, 44a) grips the ball joint head (24, 24a) beyond its equator and hence axially in a positive manner.

7. The wobble gear (1a) according to claim 6, further having an axial through-hole (B) which extends longitudinally along the output axis (E) through the ball joint head (24a) and the ball joint socket (44a).

8. The wobble gear (1a) according to claim 7, further having a bearing body (8a) which is corotatably and coaxially connected to the output body (2a) and has a head section (81a) which projects axially through the through-hole (B) and interacts in the manner of a ball joint with a rear face of the ball joint socket (44a) facing away axially from the ball joint head (24a) of the output body (2a).

9. The wobble gear (1, 1a) according to any of the preceding claims, **characterized in that** a drive body (5, 5a) is present and is mounted rotatably about a drive axis (F).

10. The wobble gear (1, 1a) according to claim 9, **characterized in that** the drive body (5) has a front face (51, 51a), in particular set obliquely relative to the drive axis (F), on which at least one roller element (52, 52a) is mounted rotatably about a rolling axis (53, 53a) relative to the drive body (5, 5a), wherein the roller element (52, 52a) for driving the wobble movement rolls on a rear face (45, 45a) of the wobble body (4, 4a) along a circular path (46, 46a) concentric to the wobble gear ring (41, 41a), in particular wherein the roller element (52, 52a) is a ball (54, 54a), and/or wherein the circular path (46) is formed by a channel (47) recessed into the rear face (45, 45a) of the wobble body (4, 4a), and/or wherein the circular path (46, 46a) has a diameter which is at least as large as a diameter of the wobble gear ring (41, 41a).

11. The wobble gear (1) according to claim 9 or 10, **characterized in that** the drive body (5) is produced in one piece from plastic in the form of a drive disk (S1), in particular wherein the drive disk (S1) has a drive shaft extension (55).

12. The wobble gear (1, 1a) according to any of the preceding claims, **characterized in that** the wobble body (4, 4a) together with the wobble gear ring (41, 41a) is produced in one piece from plastic in the form of a wobble disk (S2) and/or **in that** the output body (2, 2a) together with the output gear ring (21, 21a) is produced in one piece from plastic in the form of an output disk (S3), in particular wherein the output disk (S3) has an output shaft extension (25, 25a).

13. The wobble gear (1, 1a) according to any of the preceding claims, **characterized in that** the supporting body (3, 3a) together with the supporting gear ring (31, 31a) is a housing part (G1) produced in one piece from plastic, on which the output body (2, 2a) is mounted rotatably about the output axis (E).

**Revendications**

1. Engrenage oscillant (1, 1a), présentant

un corps de sortie (2, 2a) qui est monté de manière rotative autour d'un axe de sortie (E) et qui présente une couronne dentée de sortie (21, 21a),
un corps de support (3, 3a) non rotatif qui présente une couronne dentée de support (31, 31a),
un corps oscillant (4, 4a) qui est monté de manière à pouvoir effectuer un mouvement d'oscillation par rapport à l'axe de sortie (E), et qui présente une couronne dentée oscillante (41, 41a) qui est disposée sur une face avant (42, 42a) du corps oscillant (4, 4a) et dont le nombre de dents (z2) diffère de quelques dents, de préférence d'une, de deux ou de trois dents, du nombre de dents (z1) de la couronne dentée de sortie (21, 21a),
sachant que la couronne dentée oscillante (41, 41a) est, lors d'un mouvement d'oscillation du corps oscillant (4, 4a), en prise dentaire avec la couronne dentée de sortie (21, 21a) sur une partie de sa longueur circonférentielle, selon une alternance périphérique,
sachant que la couronne dentée de support (31, 31a) et la couronne dentée de sortie (21, 21a) sont disposées concentriquement et tournées chacune vers la face avant (42, 42a) du corps oscillant (4, 4a),
sachant que la couronne dentée oscillante (41, 41a) est, lors du mouvement d'oscillation du corps oscillant, également en prise dentaire avec la couronne dentée de support (31, 31a) sur ladite partie de sa longueur circonférentielle, selon une alternance périphérique,
et sachant que la couronne dentée de sortie (21, 21a) présente un diamètre inférieur à celui de la couronne dentée de support (31, 31a),

**caractérisé en ce qu'**une surface latérale extérieure radiale (22, 22a) de la couronne dentée de sortie (21, 21a) est appliquée contre une surface latérale intérieure radiale (32, 32a) de la couronne dentée de support (31, 31a), radialement par complémentarité de forme et de manière à coulisser en direction circonférentielle.

2. Engrenage oscillant (1, 1a) selon la revendication 1, **caractérisé en ce qu'**un nombre de dents (z3) de la couronne dentée de support (31, 31a) correspond au nombre de dents (z2) de la couronne dentée oscillante (41, 41a).

3. Engrenage oscillant (1, 1a) selon l'une des revendications précédentes, **caractérisé en ce que** la couronne dentée de support (31, 31a) présente une nervure d'espacement périphérique (33, 33a), tournée vers la face avant (42, 42a) du corps oscillant (4, 4a), laquelle contacte, lors du mouvement d'oscillation du corps oscillant (4, 4a), une nervure d'espacement complémentaire (43, 43a) de la couronne dentée oscillante (41, 41a) sur une partie de sa longueur circonférentielle, selon une alternance périphérique, limitant ainsi l'écrasement des prises dentaires.

4. Engrenage oscillant (1, 1a) selon la revendication 3, **caractérisé en ce que** la nervure d'espacement (33, 33a) et la nervure d'espacement complémentaire (43, 43a) sont dimensionnées, par rapport à une géométrie de denture à la base de l'engrenage oscillant (1, 1a), de telle sorte que les prises dentaires aient lieu respectivement sur un diamètre de cercle primitif.

5. Engrenage oscillant (1a) selon l'une des revendications précédentes, comprenant en outre un passage axial pour conduites (C) qui s'étend longitudinalement de manière continue le long de l'axe de sortie (E) entre un côté entraînement et un côté sortie de l'engrenage oscillant (1a).

6. Engrenage oscillant (1, 1a) selon l'une des revendications précédentes, **caractérisé en ce que** le corps oscillant (4, 4a) est monté de manière à pouvoir effectuer un mouvement d'oscillation au moyen d'un palier à rotule (24, 24a ; 44, 44a), lequel présente une tête d'articulation sphérique (24, 24a) formée sur le corps de sortie (2, 2a), qui s'engage avec mobilité articulaire dans une cuvette d'articulation sphérique (44, 44a) formée sur le corps oscillant (4, 4a), notamment sachant que la cuvette d'articulation sphérique (44, 44a) recouvre la tête d'articulation sphérique (24, 24a) au-delà de son équateur et l'enserre ainsi axialement par complémentarité de forme.

7. Engrenage oscillant (1a) selon la revendication 6, présentant en outre un alésage traversant axial (B) qui s'étend longitudinalement le long de l'axe de sortie (E) à travers la tête d'articulation sphérique (24a) et la cuvette d'articulation sphérique (44a).

8. Engrenage oscillant (1a) selon la revendication 7, comprenant en outre un corps de palier (8a), qui est lié au corps de sortie (2a) en rotation et coaxialement, et présente une section de tête (81a) qui fait saillie axialement à travers l'alésage traversant (B) et interagit, par articulation sphérique, avec une face arrière de la cuvette d'articulation sphérique (44a), opposée axialement à la tête d'articulation sphérique (24a) du corps de sortie (2a).

9. Engrenage oscillant (1, 1a) selon l'une des revendications précédentes, **caractérisé en ce qu'**il existe un corps d'entraînement (5, 5a) et qu'il est monté de manière rotative autour d'un axe d'entraînement (F).

10. Engrenage oscillant (1, 1a) selon la revendication 9, **caractérisé en ce que** le corps d'entraînement (5) présente une face avant (51, 51a), notamment inclinée par rapport à l'axe d'entraînement (F), sur laquelle au moins un élément roulant (52, 52a) est monté de manière mobile en rotation par rapport au corps d'entraînement (5, 5a) autour d'un axe de roulement (53, 53a), sachant que l'élément roulant (52, 52a) roule, pour entraîner le mouvement oscillant, sur une face arrière (45, 45a) du corps oscillant (4, 4a), le long d'une trajectoire circulaire (46, 46a) concentrique à la couronne dentée oscillante (41, 41a), notamment sachant que l'élément roulant (52, 52a) est une bille (54, 54a) et/ou que la trajectoire circulaire (46) est formée par une rainure (47) encastrée dans la face arrière (45, 45a) du corps oscillant (4, 4a) et/ou que la trajectoire circulaire (46, 46a) présente un diamètre au moins aussi grand qu'un diamètre de la couronne dentée oscillante (41, 41a).

11. Engrenage oscillant (1) selon la revendication 9 ou 10, **caractérisé en ce que** le corps d'entraînement (5), sous la forme d'un disque d'entraînement (S1), est fabriqué en un seul élément en plastique, notamment sachant que le disque d'entraînement (S1) présente un embout d'arbre d'entraînement (55).

12. Engrenage oscillant (1, 1a) selon l'une des revendications précédentes, **caractérisé en ce que** le corps oscillant (4, 4a), avec sa couronne dentée oscillante (41, 41a), est fabriqué en un seul élément en plastique sous la forme d'un disque oscillant (S2), et/ou **en ce que** le corps de sortie (2, 2a), avec sa couronne dentée de sortie (21, 21a), est fabriqué en un seul élément en plastique sous la forme d'un disque de sortie (S3), notamment sachant que le disque de sortie (S3) présente un embout d'arbre de sortie (25, 25a).

13. Engrenage oscillant (1, 1a) selon l'une des revendications précédentes, **caractérisé en ce que** le corps de support (3, 3a), avec sa couronne dentée de support (31, 31a), est une partie de boîtier (G1) fabriquée en un seul élément en plastique, sur laquelle le corps de sortie (2, 2a) est monté de manière rotative autour de l'axe de sortie (E).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2619838 A1

- DE 29707039 U1